(19) Europäisches Patentamt
European Patent Office
Office européen des brevets

(11) **EP 4 147 870 A1**

(12) **EUROPEAN PATENT APPLICATION**
published in accordance with Art. 153(4) EPC

(43) Date of publication:
**15.03.2023 Bulletin 2023/11**

(21) Application number: **21800166.7**

(22) Date of filing: **30.04.2021**

(51) International Patent Classification (IPC):
**B32B 27/00** (2006.01)      **C09D 5/00** (2006.01)
**C09D 201/00** (2006.01)      **C09K 3/18** (2006.01)
**C09D 7/65** (2018.01)      **C09J 7/38** (2018.01)

(52) Cooperative Patent Classification (CPC):
**B32B 27/00; C09D 5/00; C09D 7/65; C09D 201/00;
C09J 7/38; C09K 3/18**

(86) International application number:
**PCT/JP2021/017310**

(87) International publication number:
**WO 2021/225129 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.05.2020 JP 2020082731**

(71) Applicant: **NITTO DENKO CORPORATION**
**Ibaraki-shi**
**Osaka 567-8680 (JP)**

(72) Inventors:
• **ISHII Aika**
  **Ibaraki-shi, Osaka 567-8680 (JP)**
• **FUJITA Hiroyuki**
  **Ibaraki-shi, Osaka 567-8680 (JP)**
• **MARUOKA Nobuaki**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **COATING MATERIAL AND LAMINATE**

(57)    The present invention relates to a coating material containing a resin component, a first oil component, and a second oil component, in which the second oil component exudes out from a cured or dried coating film layer to which the coating material has been applied when a temperature drops to a predetermined value or less, and the first oil component satisfies at least one of (1) kinematic viscosity at 25°C of 300 cSt or more or (2) viscosity at 20°C of 0.1 Pa·s or more.

*FIG. 1*

**Description**

TECHNICAL FIELD

The present invention relates to a coating material, and more particularly to a coating material used for preventing adhesion of snow or ice on a surface of an object such as a solar panel, an aircraft, a railway, an automobile, a wind power generator, a house, a traffic light, and a signboard. The present invention also relates to a laminate formed using the coating material.

BACKGROUND ART

Adhesion of ice (ice adhesion) on an object surface and adhesion of snow (snow adhesion) due to snowfall cause many damages and obstacles in various fields. For example, ice adhesion on airfoils, snow adhesion and freezing on a lower part of an engine vehicle, snow adhesion on headlights of an automobile, ice adhesion on blades of a solar panel or a wind power generator, snow adhesion and freezing on a lamp of a traffic light, and the like may be obstacles to operation, driving, and safety thereof.

In addition, snow adhesion and freezing on a house roof, a signboard, or the like may cause damage to a person due to damage to these structures or falling snow.

In related art, in each industrial field, various coating materials containing oil have been developed as a countermeasure for preventing such snow adhesion and ice adhesion on the object surface.

For example, Patent Literature 1 discloses a coating material for water-repellent coating, which contains one kind or a mixture of a plurality of kinds of fluorine resin powder or inorganic fine powder whose surface has been subjected to a hydrophobic treatment, a silicone resin binder, and one kind or a mixture of a plurality of kinds of silicone oil and fluorosilicone oil.

CITATION LIST

PATENT LITERATURE

Patent Literature 1: JP2000-026844A

SUMMARY OF INVENTION

TECHNICAL PROBLEM

However, according to a study of the present inventors, in the coating material in related art as disclosed in Patent Literature 1, there is a problem that an amount of oil (hereinafter, sometimes referred to as an "initial bleed oil amount") that bleeds from a coating film layer obtained from the coating material within a certain period of time (for example, within 20 hours) is large, and an ice and/or snow adhesion prevention function of the coating film layer cannot be maintained for a long time.

The present invention has been made in view of the above circumstances of the related art, and an object of the present invention is to provide a coating material which can form a coating film layer capable of reducing an initial bleed oil amount and maintaining an ice and/or snow adhesion prevention function for a long time.

SOLUTION TO PROBLEM

As a result of intensive studies to solve the above problems, the present inventors have focused on kinematic viscosity of an oil component and have completed the present invention.

That is, the present invention relates to the following <1> to <4>.

<1> A coating material containing a resin component, a first oil component, and a second oil component, in which

the second oil component can exude out from a cured or dried coating film layer to which the coating material has been applied when a temperature drops to a predetermined value or less, and
the first oil component satisfies at least one of the following (1) or (2):

(1) kinematic viscosity at 25°C is 300 cSt or more, and
(2) viscosity at 20°C is 0.1 Pa s or more.

<2> The coating material according to <1>, in which

a difference between a value of a solubility parameter of the resin component and a value of a solubility parameter of the first oil component is smaller than a difference between the value of the solubility parameter of the resin component and a value of a solubility parameter of the second oil component.

<3> The coating material according to <1> or <2>, in which

the viscosity of the first oil component at 20°C is 30 Pa·s or less.

<4> A laminate including the coating film layer obtained by curing the coating material according to any one of <1> to <3>, and a pressure-sensitive adhesive layer.

ADVANTAGEOUS EFFECTS OF INVENTION

A coating film layer obtained from a coating material of the present invention can reduce an initial bleed oil amount, and can maintain an ice and/or snow adhesion prevention function for a long time.

BRIEF DESCRIPTION OF DRAWINGS

[FIG. 1] FIG. 1 is a cross-sectional view showing a coating film layer formed from a coating material of the present invention together with an object to be coated.
[FIG. 2] FIG. 2 is a cross-sectional view showing an example of a layer structure including the coating film layer formed from the coating material of the present invention together with the object to be coated.

DESCRIPTION OF EMBODIMENTS

Hereinafter, embodiments of the present invention will be described in more detail, but the present invention is not limited to the following embodiments at all.

[Coating Material]

A coating material of the present invention contains a resin component, a first oil component, and a second oil component.

(Resin Component)

The resin component may be any of a moisture curable resin that is cured by moisture, an ultraviolet curable resin that is cured by ultraviolet irradiation, and a thermosetting resin that is cured by being heated. In addition, the resin component may be a resin that is cured by addition of a curing agent that cross-links with the resin component, or a thermoplastic resin.

Examples of the resin component include, but are not particularly limited to, silicone resins, polyurethane resins, polyurethane acrylic resins, vinyl chloride resins, polyester resins, elastomers, fluorine resins, polyamide resins, polyolefin resins (polyethylene, polypropylene, etc.), acrylic resins, ethylene-propylene-diene rubbers (EPDM), styrene-based thermoplastic elastomers (SEBS), styrene-butadiene rubbers (SBR), etc.

Any appropriate silicone resin may be adopted as the silicone resin as long as the effects of the present invention are not impaired. The silicone resin may be of only one kind or of two or more kinds. Such a silicone resin may be a condensation-type silicone resin or an addition-type silicone resin. In addition, such a silicone resin may be a one-component silicone resin (e.g., a one-component room temperature vulcanizing (RTV) resin) which is dried alone, or may be a two-component silicone resin (e.g., a two-component room temperature vulcanizing (RTV) resin).

Examples of the silicone resin include one-component RTV rubbers (e.g., KE-3423, KE-347, KE-3475, KE-3495, KE-4895, KE-4896, KE-1830, KE-1884, KE-3479, KE-348, KE-4897, KE-4898, KE-1820, KE-1825, KE-1831, KE-1833, KE-1885, KE-1056, KE-1151, KE-1842, KE-1886, KE-3424G, KE-3494, KE-3490, KE-40RTV, KE-4890, KE-3497, KE-3498, KE-3493, KE-3466, KE-3467, KE-1862, KE-1867, KE-3491, KE-3492, KE-3417, KE-3418, KE-3427, KE-3428, KE-41, KE-42, KE-44, KE-45, KE-441, KE-445, and KE-45S) manufactured by Shin-Etsu Chemical Co., Ltd., two-component RTV rubbers (e.g., KE-1800T-A/B, KE-66, KE-1031-A/B, KE-200, KE-118, KE-103, KE-108, KE-119, KE-109E-AB, KE-1051J-A/B, KE-1012-A/B, KE-106, KE-1282-A/B, KE-1283-A/B, KE-1800-A/B/C, KE-1801-A/B/C, KE-1802-A/B/C, KE-1281-A/B, KE-1204-A/B, KE-1204-AL/BL, KE-1280-A/B, KE-513-A/B, KE-521-A/B, KE-1285-A/B, KE-1861-A/B, KE-12, KE-14, KE-17, KE-113, KE-24, KE-26, KE-1414, KE-1415, KE-1416, KE-1417, KE-1300T, KE-1310ST, KE-1314-2, KE-1316, KE-1600, KE-117603-A/B, KE-1606, KE-1222-AB, and KE-1241) manufactured by Shin-Etsu Chemical Co., Ltd., silicone sealants (e.g., KE-42AS, KE-420, and KE-450) manufactured by Shin-Etsu Chemical Co., Ltd., rubber compounds (e.g., KE-655-U, KE-675-U, KE-931-U, KE-941-U, KE-951-U, KE-961-U, KE-971-U, KE-981-U, KE-961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-582-U, KE-552B-U, KE-555-U, KE-575-U, KE-541-U, KE-551-U, KE-561-U, KE-571-U, KE-581-U, KE-520-U, KE-530B-2-U, KE-540B-2-U, KE-1551-U, KE-1571-U, KE-152-U, KE-174-U, KE-3601SB-U, KE-3711-U, KE-3801M-U, KE-5612G-U, KE-5620BL-U, KE-5620W-U, KE-5634-U, KE-7511-U, KE-7611-U, KE-765-U, KE-785-U, KE-7008-U, KE-7005-U, KE-503-U, KE-5042-U, KE-505-U, KE-6801-U, and KE-136Y-U) manufactured by Shin-Etsu Chemical Co., Ltd., a liquid silicone rubber injection molding system (LIMS) (e.g., KEG-2000-40A/B, KEG-2000-50A/B, KEG-2000-60A/B, KEG-2000-70A/B, KEG-2001-40A/B, KEG-2001-50A/B, KE-1950-10A/B, KE-1950-20A/B, KE-1950-30A/B, KE-1950-35A/B, KE-1950-40A/B, KE-1950-50A/B, KE-1950-60A/B, KE-1950-70A/B, KE-1935A/B, KE-193185A/B, KE-1987A/B, KE-1988A/B, KE-2019-40A/B, KE-2019-50A/B, KE-2019-60A/B, KE-2017-30A/B, KE-2017-40A/B, KE-2017-50A/B, KE-2090-40A/B, KE-2090-50A/B, KE-2090-60A/B, KE-2090-70A/B, KE-2096-40A/B, KE-2096-50A/B, and KE-2096-60A/B) manufactured by Shin-Etsu Chemical Co., Ltd., dimethiconol (e.g., X-21-5847 and X-21-5849) manufactured by Shin-Etsu Chemical Co., Ltd., LR7665 series manufactured by Wacker Asahikasei Silicone Co., Ltd., LR3033 series manufactured by Wacker Asahikasei Silicone Co., Ltd., TSE3032 series manufactured by Momentive Performance Co., Ltd., Sylgard184 manufactured by Dow Coming Toray Co., Ltd., etc.

(Oil Component)

In the present invention, a first oil component and a second oil component are used.
The first oil component satisfies at least one of the following (1) or (2).

(1) Kinematic viscosity at 25°C is 300 cSt or more.
(2) Viscosity at 20°C is 0.1 Pa s or more.

The kinematic viscosity of the first oil component at 25°C is preferably 300 cSt or more, more preferably from 300 cSt to 10,000 cSt, and still more preferably from 300 cSt to 5,000 cSt, from the viewpoint of reducing the initial bleed oil amount. The kinematic viscosity can be measured by a method described in Examples.
The viscosity of the first oil component at 20°C is preferably 0.1 Pa·s or more, more preferably 1 Pa·s or more, and still more preferably 5 Pa·s or more from the viewpoint of reducing the initial bleed oil. An upper limit of the viscosity is not particularly limited, and may be, for example, 30 Pa·s or less. The viscosity can be measured by a method described in Examples.
When the at least one of the above (1) or (2) is satisfied, a moving speed of a substance in the coating material decreases, and thus it is presumed that the initial bleed oil amount can be reduced.
Examples of the first oil component include silicone oil, fluorine oil, hydrocarbon-based oil, polyether-based oil, ester-based oil, phosphorus compound-based oil, mineral-based oil.
Examples of the silicone oil include silicone oils (e.g., KF96 series, KF965 series, KF50 series, KF54 series, KF410 series, KF412 series, and FL series) manufactured by Shin-Etsu Chemical Co., Ltd., silicone oils (e.g., Element 14 * PDMS series, TSF433 series, TSF451 series, TSF456 series, THF450 series, TSF4420 series, and TSF4421 series) manufactured by Momentive Performance Co., Ltd., silicone oils (e.g., SF8416 series, SF8422 series, SH200 series, SH203 series, FS1265 series, SH510 series, SH710 series, FZ-2164 series, FZ-2191 series, FZ-5609 series, L-7001 series, L-7002 series, L-7004 series, and FZ-2203 series) manufactured by Dow Coming Toray Co., Ltd., silicone oils (WACKER (registered trademark) SILICONE FLUID AK series, WACKER (registered trademark) SILICONE FLUID AKF series, WACKER (registered trademark) SILICONE FLUID AP series, WACKER (registered trademark) SILICONE FLUID AR series, WACKER (registered trademark) TN series, WACKER (registered trademark) AF series, etc.) manufactured by Wacker Asahikasei Silicone Co., Ltd., etc.
The second oil component can exude out from a cured or dried coating film layer to which the coating material of the present invention has been applied when a temperature drops to a predetermined value or less.
The term "a predetermined value or less" means, for example, a freezing point (0°C) or less.
Examples of the second oil component include silicone oil, fluorine oil, hydrocarbon-based oil, polyether-based oil, ester-based oil, phosphorus compound-based oil, mineral-based oil.
Examples of the silicone oil include silicone oils (e.g., BY16-201) manufactured by Dow Coming Toray Co., Ltd., silicone oils (e.g., KF-6000, KF-6001, KF-6002, KF-6003, KF-6011, KF-6011P, KF-6043, PAM-E, KF-8010, X-22-161A, X-22-161B, KF-8012, KF-8008, X-22-1660B-3, X-22-9409, X-22-4952, X-22-4272, KF-6123, X-22-162C, X-21-5841, KF-9701, KF-864, KF-865, KF-868, KF-859, KF-393, KF-860, KF-880, KF-8004, KF-8002, KF-8005, KF-867, KF-8021, KF-869, KF-861, X-22-3939A, X-22-4039, X-22-4015, X-22-3701E, X-22-173BX, X-22-173DX, X-22-176F, X-22-176DX, X-22-176GX-A, and X-22-3710) manufactured by Shin-Etsu Chemical Co., Ltd, etc.

(Characteristics of Resin Component and Oil Component)

Hereinafter, when two kinds of oil components (a first oil component and a second oil component) are used, characteristics of the resin component and the oil components will be described.

As the first oil component, the second oil component, and the resin component, for example, a combination satisfying the following properties 1) and 2) is preferably selected.

1) The resin component and/or the first oil component and the second oil component are not phase-separated and are compatible with each other at a temperature at which bleeding of the second oil component is not required, for example, at a normal temperature of about 20°C to 80°C, which is significantly higher than a predetermined value such as a freezing point. On the other hand, the resin component and/or the first oil component and the second oil component are phase-separated under an environment of a temperature at which the bleeding of the second oil component is required, for example, a temperature of a predetermined value, such as a freezing point, or less.

2) The first oil component has affinity for the resin component at both the temperature at which the bleeding of the second oil component is not required and the temperature at which the bleeding of the second oil component is required. On the other hand, in the presence of the first oil component, a behavior of the second oil component is changed depending on whether a temperature is the temperature at which the bleeding of the second oil component is not required or the temperature at which the bleeding of the second oil component is required. In other words, the second oil component functions as a low-temperature phase-separable oil component that is phase-separated from the resin component and/or the first oil component.

In addition, it is empirically known that a value (SP value) of a solubility parameter serves as an indicator for determining ease of mixing of a solvent and a solute. A relationship between the first oil component, the second oil component, and the resin component described above can also be described based on a relationship between values of the solubility parameters of these. The value of the solubility parameter can be measured by a method described in Examples.

In order to satisfy the relationships 1) and 2) described above, at least a difference between the value of the solubility parameter of the resin component and the value of the solubility parameter of the first oil component is preferably set to be smaller than a difference between the value of the solubility parameter of the resin component and the value of the solubility parameter of the second oil component. The difference in solubility parameter between the first oil component and the resin component is preferably set to 0.6 $(J/cm^3)^{1/2}$ or less.

For example, when the relationships 1) and 2) described above are satisfied, the second oil component is compatible with the resin component and/or the first oil component and does not bleed at the temperature at which the bleeding of the second oil component is not required. On the other hand, when the temperature is changed to the temperature at which the bleeding of the second oil component is required, the second oil component is phase-separated from the resin component and/or the first oil component to exude out from the resin component, and can function as a bleedable low-temperature phase-separable oil component.

Here, the embodiment in which the difference between the value of the solubility parameter of the resin component and the values of the solubility parameters of the first oil component and the second oil component is set to a predetermined relationship, thereby exuding (bleeding) a part of the oil component, particularly the second oil component, in the coating film layer to prevent ice and/or snow adhesion has been described as an example, but the scope of the present invention is not limited to these embodiments.

For example, compatibility can be controlled in the same manner by utilizing a difference in molecular weight or a difference in molecular structure between the first oil component and the second oil component, and the second oil component can be phase-separated from the resin component and/or the first oil component to exude out from the coating film layer when the temperature drops to the predetermined value or less.

In the present invention, a wetting parameter determined by the following formula (1) is preferably 1.5 $(J/cm^3)^{1/2}$ or less, more preferably 0.8 $(J/cm^3)^{1/2}$ or less, still more preferably 0.5 $(J/cm^3)^{1/2}$ or less, particularly preferably 0.3 $(J/cm^3)^{1/2}$ or less.

$$\text{Wetting parameter } [(J/cm^3)^{1/2}] = |\text{value of solubility parameter of coating film layer} - \text{value of solubility parameter of second oil component}| \ ... \ (1)$$

(In the formula (1), the coating film layer is a coating film layer obtained by curing or drying the coating material.)

As shown in the above formula (1), the wetting parameter is obtained as an absolute value of a difference between a value $SP_1$ of the solubility parameter of the coating film layer obtained by curing or drying the coating material of the present invention and a value $SP_2$ of the solubility parameter of the second oil component. The value of the solubility parameter can be measured by the method described in Examples.

When the wetting parameter is 1.5 $(J/cm^3)^{1/2}$ or less, wettability of the bleeding second oil component to the coating film layer to be formed is increased, and oil efficiently spreads to a surface of the coating film layer even when a small amount of oil bleeds. Accordingly, an effect of preventing the ice and/or snow adhesion can be exhibited with a smaller amount of oil component.

The wetting parameter is not particularly limited as long as the wetting parameter is a value higher than 0 $(J/cm^3)^{1/2}$, and may be, for example, 0.001 $(J/cm^3)^{1/2}$ or more, and more preferably 0.01 $(J/cm^3)^{1/2}$ or more.

In the present invention, a solubility parameter contribution value determined by the following formula (3) is preferably 0.1 or more, more preferably 0.2 or more, still more preferably 0.3 or more, particularly preferably 0.4 or more.

$$\text{Solubility parameter contribution value} = f \times \varphi \times 100 \ ... \ (3)$$

(In the formula (3), f is a value determined by the following formula (3a), and $\varphi$ is a value determined by the following formula (3b)).

$$f = ((f_{d1} - f_{d2})^2 + (f_{p1} - f_{p2})^2 + (f_{h1} - f_{h2})^2)^{0.5} \ ... \ (3a)$$

(In the formula (3a), $f_{d1}$ is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6)).

$$f_{d1} = \delta_{d1}/(\delta_{d1} + \delta_{p1} + \delta_{h1}) \ ... \ (3a1)$$

$$f_{d2} = \delta_{d2}/(\delta_{d2} + \delta_{p2} + \delta_{h2}) \ ... \ (3a2)$$

$$f_{p1} = \delta_{p1}/(\delta_{d1} + \delta_{p1} + \delta_{h1}) \ ... \ (3a3)$$

$$f_{p2} = \delta_{p2}/(\delta_{d2} + \delta_{p2} + \delta_{h2}) \ ... \ (3a4)$$

$$f_{h1} = \delta_{h1}/(\delta_{d1} + \delta_{p1} + \delta_{h1}) \ ... \ (3a5)$$

$$f_{h2} = \delta_{h2}/(\delta_{d2} + \delta_{p2} + \delta_{h2}) \ ... \ (3a6)$$

(In the formulae (3a1) to (3a6),

$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,
$\delta_{p2}$ is energy $(J/cm^3)^{1/2}$ due to a dipole interaction of the incompatible molecular unit,
$\delta_{h1}$ is energy $(J/cm^3)^{1/2}$ due to a hydrogen bond of the compatible molecular unit,
$\delta_{h2}$ is energy $(J/cm^3)^{1/2}$ due to a hydrogen bond of the incompatible molecular unit.

The compatible molecular unit is a molecular unit that exists in the largest amount in the coating film layer obtained by curing or drying the coating material, and
the incompatible molecular unit is a molecular unit in an oil component P for which a difference in solubility parameter from the compatible molecular unit is 0.01 $(J/cm^3)^{1/2}$ or more.)

$$\varphi = (1 - \text{gel fraction (\%)}/100) \times m \ ... \ (3b)$$

(In the formula (3b), the gel fraction (%) is a value determined by the following formula (2), and m is a value determined by the following formula (3b1)).

$$\text{Gel fraction (\%)} = \{\text{mass (g) of coating film layer after heating and drying/mass (g)}$$
$$\text{of coating film layer}\} \times 100 \ ... \ (2)$$

(In the formula (2), the coating film layer is a coating film layer obtained by curing or drying the coating material of the present invention. The coating film layer after heating and drying is a coating film layer obtained by immersing the coating film layer in toluene for 24 hours and heating and drying the coating film layer in an environment of 150°C for 2 hours).

$$m = \{\text{mass (g) of incompatible molecular unit contained in all oil components in}$$
$$\text{coating film layer/mass (g) of all oil components in coating film layer}\} \ ... \ (3b1)$$

(In the formula (3b1), the "mass of incompatible molecular unit contained in all oil components in coating film layer" can be calculated by NMR measurement of all the oil components contained in the coating film layer obtained by curing or drying the coating material. All the oil components are residues obtained by immersing the coating film layer in toluene for 24 hours and drying the coating film layer in an environment of 150°C for 2 hours).

An upper limit of the solubility parameter contribution value may be, for example, 3.0 or less, preferably 2.5 or less, more preferably 2.0 or less, and still more preferably 1.5 or less.

The solubility parameter contribution value represents a degree of compatibility of the coating film layer. The larger the value is, the more incompatible the coating film layer is. When the solubility parameter contribution value is within the range described above, the contained oil component easily bleeds, and thus a high effect of preventing the ice and/or snow adhesion can be exhibited.

As is clear from the above description, the first oil component and the second oil component do not need to be distinguished from each other in terms of substances, and may be distinguished from each other in terms of functions and actions described above. Therefore, both the first oil component and the second oil component do not need to be constituted by one oil component, and each of the first oil component and the second oil component may contain a plurality of oil components as long as the above-described conditions are satisfied.

(Other Components)

The coating material of the present invention may further contain an inorganic filler such as silica, a crosslinking agent, and a curing catalyst.

Examples of the silica include silica (e.g., AEROSIL 50, 130, 200, 300, R972, R974, R976, RX50, RX200, RX300, RY50, RY300, R7200, R8200, and R9200) manufactured by Nippon Aerosil Co., Ltd., etc.

Examples of the crosslinking agent include crosslinking agents (e.g., ethylsilicate 40, ethylsilicate 48, methylsilicate 51, methylsilicate 53A, EMS-485, ethylsilicate 28, ethylsilicate 28P, N-propylsilicate, N-butylsilicate, HAS-1, HAS-6, and HAS-10) manufactured by Colcoat Co., Ltd., crosslinking agents (e.g., methyltrimethoxysilane, dimethyldimethoxysilane, tetraethoxysilane, methyltriethoxysilane, dimethyldiethoxysilane, n-propyltrimethoxysilane, n-propyltriethoxysilane, hexyltrimethoxysilane, hexyltriethoxysilane, and octyltriethoxysilane) manufactured by Shin-Etsu Chemical Co., Ltd., crosslinking agents (e.g., Dynasylan Silbond 40) manufactured by Evonik Japan Co., Ltd., etc.

Examples of the curing catalyst include curing catalysts (e.g., Pocat 25) manufactured by Nippon Chemical Industrial Co., Ltd., curing catalysts (e.g., dibutyltin dilaurate) manufactured by Tokyo Chemical Industry Co., Ltd., curing catalysts (e.g., CAT-PL-50T) manufactured by Shin-Etsu Chemical Co., Ltd., etc.

(Method for Producing Coating Material)

The coating material of the present invention can be obtained by mixing and/or stirring the components described above by a known method. A content of each component in the coating material is as follows.

The content of the resin component may be set to preferably 30 mass% or more, more preferably 35 mass% or more, and still more preferably 40 mass% or more, based on a total mass of the finally formed coating film layer. An upper limit of the content of the resin component is not particularly limited and is appropriately set in relation to the oil component. For example, the content of the resin component is 70 mass% or less, based on the total mass of the finally formed coating film layer.

A content of the first oil component may be set to preferably 10 mass% or more, more preferably 15 mass% or more, and still more preferably 20 mass% or more, based on the total mass of the finally formed coating film layer. An upper limit of the content of the first oil component is not particularly limited, but the content may be set to preferably 65 mass% or less, more preferably 50 mass% or less, still more preferably 40 mass% or less, particularly preferably 30 mass% or less, and most preferably 20 mass% or less, based on the total mass of the finally formed coating film layer.

A content of the second oil component is preferably 5 mass% or more, more preferably 10 mass% or more, still more preferably 15 mass% or more, based on the total mass of the finally formed coating film layer. An upper limit of the content of the second oil component is not particularly limited, but the content may be set to preferably 62 mass% or less, more preferably 60 mass% or less, still more preferably 50 mass% or less, particularly preferably 40 mass% or less, and most preferably 30 mass% or less, based on the total mass of the finally formed coating film layer.

A content of silica may be set to preferably 2 mass% or more, more preferably 5 mass% or more, and still more preferably 10 mass% or more, based on the total mass of the finally formed coating film layer. The content of silica may be set to preferably 40 mass% or less, more preferably 30 mass% or less, and still more preferably 20 mass% or less, based on the total mass of the finally formed coating film layer.

A content of the crosslinking agent may be set to preferably 0.1 mass% or more, more preferably 0.3 mass% or more, and still more preferably 0.5 mass% or more, based on the total mass of the finally formed coating film layer. The content of the crosslinking agent may be set to preferably 50 mass% or less, more preferably 30 mass% or less, and still more preferably 15 mass% or less, based on the total mass of the finally formed coating film layer.

A content of the curing catalyst may be set to preferably 0.01 mass% or more, more preferably 0.05 mass% or more, and still more preferably 0.1 mass% or more, based on the total mass of the finally formed coating film layer. The content of the curing catalyst may be set to preferably 20 mass% or less, more preferably 10 mass% or less, and still more preferably 5 mass% or less, based on the total mass of the finally formed coating film layer.

(Coating Film Layer)

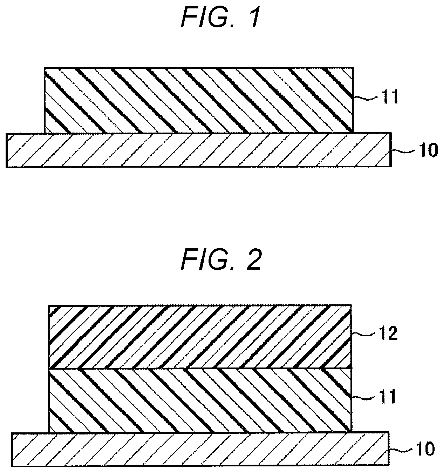

For example, as shown in FIG. 1, a first coating film layer 11 can be obtained by applying the coating material of the present invention to an object 10 to be coated.

As a coating method of the coating material of the present invention, general methods such as brush coating, spray coating, and various coater coating can be used. Coating is usually performed 1 or 2 times.

A thickness of the first coating film layer 11 is not particularly limited, and is preferably 1000 $\mu$m or less, because the oil component can easily permeate to the surface of the coating film layer, in other words, oil permeability with respect to the first coating film layer 11 is obtained, and is preferably 50 $\mu$m or more from the viewpoint of strength.

Examples of the object 10 to be coated used in the present invention include polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), metal plates or metal foils (aluminum, copper, silver, iron, nickel, tin, stainless steel, etc.), concrete, ceramics, etc.

After the coating material of the present invention is applied to the object 10 to be coated, the coating material can be cured or dried by being left to stand in an environment of, for example, 20°C to 180°C, preferably 80°C to 150°C for, for example, 3 minutes to 3 hours, and it is most preferable to leave the object 10 to be coated in an environment of 150°C for 3 minutes.

For example, as shown in FIG. 2, a second coating film layer 12 can be formed on the first coating film layer 11 obtained from the coating material of the present invention with a top-coat coating material as necessary.

The top-coat coating material is not particularly limited, and for example, the same coating material as the coating material of the present invention can be used, but the top-coat coating material may not contain an oil component.

As a coating method of the top-coat coating material, general methods such as brush coating, spray coating, and various coater coating can be used. Coating is usually performed 1 or 2 times.

A thickness of the second coating film layer 12 is not particularly limited, but is preferably 500 $\mu$m or less, because the oil component can easily permeate to the surface of the coating film layer, in other words, oil permeability with respect to the second coating film layer 12 is obtained, and is preferably 50 $\mu$m or more from the viewpoint of strength.

A curing or drying temperature and a curing or drying time at the time of coating the first coating film layer 11 with the top-coat coating material are the same as a curing or drying temperature and a curing or drying time at the time of coating the object 10 to be coated with the coating material of the present invention.

The curing or drying of the coating material of the present invention and the curing or drying of the top-coat coating material may be performed simultaneously or separately.

[Laminate]

A laminate of the present invention includes the coating film layer obtained by curing or drying the coating material of the present invention and a pressure-sensitive adhesive layer.

The laminate of the present invention is obtained by curing or drying the coating material of the present invention in advance in a state where a thin film having a thickness of, for example, 10 μm to 1000 μm is formed to form a coating film layer, and providing the pressure-sensitive adhesive layer on the coating film layer by using a known process of related art.

The pressure-sensitive adhesive layer can be used to cause the coating film layer obtained by curing or drying the coating material of the present invention to adhere to surfaces of various objects.

The pressure-sensitive adhesive layer is not particularly limited, and examples thereof include an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive.

The pressure-sensitive adhesive layer may be an oil-impermeable pressure-sensitive adhesive layer in order to prevent the oil component from flowing out of the coating film layer.

The oil-impermeable pressure-sensitive adhesive layer is not particularly limited, and examples thereof include an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive.

[Examples]

Hereinafter, the present invention will be described in more detail with reference to Examples and the like, but the present invention is not limited to the following Examples.

<Preparation of Coating Film Layer>

[Example 1]

As a coating material component,

a resin component: KE-1935A (manufactured by Shin-Etsu Chemical Co., Ltd.), and KE-1935B (manufactured by Shin-Etsu Chemical Co., Ltd.);
a first oil component: a dimethylsiloxane oil (manufactured by Shin-Etsu Chemical Co., Ltd., product number: KF-96-300); and
a second oil component: a carbinol-modified oil (BY16-201, manufactured by Dow Coming Toray Co., Ltd.) were prepared.

The resin component [KE-1935A (20 mass%), KE-1935B (20 mass%)], the first oil component (48 mass%), and the second oil component (12 mass%) were mixed under conditions of 25°C and 101 kPa. The obtained mixed solution was stirred with a spatula at a speed of about 120 rpm for 60 seconds, and then stirred with a disperser (LABOLUTION, manufactured by Primix Corporation) at a speed of 2000 rpm for 5 minutes to obtain a coating material.

The obtained mixture was applied onto a polyethylene terephthalate (PET) sheet body (Lumirror S10 # 75, manufactured by Toray Industries, Inc.) using an applicator, and heated and cured in an environment of 150°C for 3 minutes to form a coating film layer having a thickness of 250 μm.

[Examples 2 to 7 and Comparative Examples 1 to 3]

Coating film layers were formed in the same manner as in Example 1, except that the product number of the first oil component: dimethylsiloxane oil (manufactured by Shin-Etsu Chemical Co., Ltd.) was changed as shown in Table 1.

[Examples 8 to 10 and Comparative Examples 4 and 5]

Coating film layers were formed in the same manner as in Example 1 except that the second oil component was changed to a carbinol-modified oil (KF-6002, manufactured by Shin-Etsu Chemical Co., Ltd.) and the product number of the first oil component: a dimethylsiloxane oil (manufactured by Shin-Etsu Chemical Co., Ltd.) was changed as shown in Table 2.

<Evaluation>

The following evaluations were performed using the coating material components and the obtained coating film layers. Results are shown in Tables 1 and 2.

[First oil component]

(Kinematic Viscosity at 25°C)

The kinematic viscosity of the first oil component at 25°C was measured using an Ubbelohde viscometer based on JIS Z 8803: 2011 (https://kikakurui.com/z8/Z8803-2011-01.html).

(Viscosity at 20°C)

The viscosity with respect to a shear rate was measured using a rotary viscometer (HAAKE, manufactured by Thermo Fisher Scientific Co., Ltd.). In the measurement, the shear rate was increased from 0.1 [1/s] to 1,000 [1/s] in 30 seconds, and a value of the viscosity at the shear rate of 1.0 [1/s] when the shear rate was increased was used. A parallel plate (diameter: 35 mm) was used as a measurement jig, a gap between plates was set to 0.024 mm, and a measurement temperature was set to 20°C by a temperature control unit.

[Solubility Parameter]

Fourier transform nuclear magnetic resonance spectroscopy analysis was performed to examine a type and a molar ratio of a molecular unit constituting the molecular structure of each coating material component. A solubility parameter (Hansen solubility parameter) of each molecular unit was determined by calculating a weighted average in terms of the molar ratio.

The Hansen solubility parameter of each molecular unit can be determined by a molecular group contribution method using software "HSPiP, Hansen Solubility Parameters in Practice ver4" available from a link (https://hansen-soLubiLity.com/). Specifically, HSP values ($\delta_d$, $\delta_p$, $\delta_h$) of the respective units can be calculated by inputting the respective constituent units in a target substance by a SMILES notation.

[Coating Film Layer]

(Ice Adhesion Strength)

A subject to be measured was a force required for moving ice blocks adhering on the coating film layer in an environment of -20°C. For convenience, magnitude of this force is defined as an "ice adhesion strength" in the present specification.

The ice adhesion strength was measured by the following method.

First, a cylindrical ice block was produced. The ice block was produced by placing a stainless ring (inner diameter: 25 mm) on a bottom surface of a styrol square case 16 type (manufactured by AS ONE Corporation), pouring 6 g of pure water into the stainless ring, freezing the pure water at -20°C for 16 hours or more, and removing the stainless ring after the freezing.

Next, a PET film and the coating film layer, which were left to stand in an environment of -20°C for 16 hours, were attached to a stainless plate placed in parallel to a floor surface so that the coating film layer was on a surface of the stainless plate. The cylindrical ice block having an adhesion area of 4.9 cm$^2$ was adhered thereto.

After 3 hours from the setting of the environmental temperature to -20°C and the adhesion of the ice block, the ice block was pressed from a direction parallel to the floor surface in an environment of -20°C with a load cell (DPU-50 manufactured by Imada Co., Ltd., attachment jig A type A-4) at a speed of 0.1 mm/sec, and a load applied for 40 seconds was measured with a force gauge (ZTS-50N manufactured by Imada Co., Ltd.). A value obtained by dividing a measured maximum load by the adhesion area of 4.9 cm$^2$ was recorded as the ice adhesion strength. The test was performed three times, and an average value of these was determined.

This measurement method was determined with reference to "Investigation to Prevent Icing (Part I), Hokkaido Industrial Research Institute Report No. 292 (1993)". The ice adhesion strength decreases substantially proportionally in response to an increase in a surface oil amount at least at -20°C.

(Initial Bleed Oil Amount)

A measurement target was an amount of oil which bled out on the surface of the coating film layer at -20°C. In the measurement, it was confirmed that the oil which bled out was mainly the second oil component.

The initial bleed oil amount was measured by the following method.

The film was cut into a size of 10 cm × 2 cm in the vicinity of a center of the coating film layer, and left at -20°C for 20 hours. The oil bleeding on the surface of the coating film layer was collected by a cell scraper (CSS-2510, manufactured by KENIS, Ltd.), and the oil was absorbed using an oil-absorbing paper until no change in a mass (oil absorption amount) of the oil-absorbing paper was observed. The oil collection by the cell scraper and the absorption by the oil-absorbing paper were repeated seven times per minute. A difference in the mass of the oil-absorbing paper before and after the oil absorption was defined as the initial bleed oil amount. The test was performed three times, and an average value of these was calculated.

[Table 1]

Table 1

|  | Information on First Oil Component | | | | Solubility Parameter (J/cm$^3$)$^{1/2}$ | | | Coating Film Layer | |
|  | Product Number | Kinematic Viscosity at 25°C (cSt) | Viscosity at 20°C (Pa·s) | Number Average Molecular Weight | Resin Component | First Oil Component | Second Oil Component | Ice Adhesion Strength (N/cm$^2$) | Initial Bleed Oil Amount ($\mu$g/cm$^2$) |
|---|---|---|---|---|---|---|---|---|---|
| Example 1 | KP-96-300 | 300 | 0.19 | 14422 | 11.7 | 11.7 | 12.3 | < 0.1 | 489 ± 5 |
| Example 2 | KP-96-500 | 500 | 0.34 | 19079 | 11.7 | 11.7 | 12.3 | < 0.1 | 476 ±7 |
| Example 3 | KF-96-1000 | 1000 | 0.65 | 26439 | 11.7 | 11.7 | 12.3 | <0.1 | 300 ± 25 |
| Example 4 | KF-96-3000 | 3000 | 1.90 | 36301 | 11.7 | 11.7 | 12.3 | < 0.1 | 410 ±9 |
| Example 5 | KF-96-5000 | 5000 | 3.10 | 48250 | 11.7 | 11.7 | 12.3 | < 0.1 | 340 ± 40 |
| Example 6 | KF-96H-10000 | 10000 | 6.40 | 67452 | 11.7 | 11.7 | 12.3 | < 0.1 | 274 ± 29 |
| Example 7 | KF-96H-30000 | 30000 | 20.30 | 81276 | 11.7 | 11.7 | 12.3 | < 0.1 | 206 ±4 |
| Comparative Example 1 | KF-96-10 | 10 | Less than 0.003 | 1231 | 11.7 | 11.8 | 12.3 | < 0.1 | 1151 ± 75 |
| Comparative Example 2 | KF-96-50 | 50 | 0. 02 | 3793 | 11.7 | 11.8 | 12.3 | < 0.1 | 753 ± 23 |
| Comparative Example 3 | KF-96-100 | 100 | 0.06 | 6610 | 11.7 | 11.7 | 12.3 | < 0.1 | 566 ± 16 |

[Table 2]

Table 2

| | Information on First Oil Component | | | | Solubility Parameter $(J/cm^3)^{1/2}$ | | | Coating Film Layer | |
|---|---|---|---|---|---|---|---|---|---|
| | Product Number | Kinematic Viscosity at 25°C (cSt) | Viscosity at 20°C (Pa·s) | Number Average Molecular Weight | Resin Component | First Oil Component | Second Oil Component | Ice Adhesion Strength $(N/cm^2)$ | Initial Bleed Oil Amount ($\mu g/cm^2$) |
| Example 8 | KF-96-500 | 500 | 0.34 | 19079 | 11.7 | 11.7 | 12.0 | < 0.1 | 1064 ± 25 |
| Example 9 | KF-96-3000 | 3000 | 1.90 | 36301 | 11.7 | 11.7 | 12 | < 0.1 | 941 ± 14 |
| Example 10 | KF-96H-30000 | 30000 | 20.30 | 81276 | 11.7 | 11.7 | 12 | < 0.1 | 726 ± 8 |
| Comparative Example 4 | KF-96-50 | 50 | 0.02 | 3793 | 11.7 | 11.8 | 12.0 | < 0.1 | 1667 ± 23 |
| Comparative Example 5 | KF-96-100 | 100 | 0.06 | 6610 | 11.7 | 11.7 | 12.0 | < 0.1 | 1431 ± 25 |

From the results shown in Tables 1 and 2, it was found that a coating film layer capable of reducing the initial bleed oil amount and maintaining an ice and/or snow adhesion prevention function for a long time can be obtained from the coating material of the present invention.

Although the present invention has been described in detail and with reference to particular embodiments, it will be apparent to those skilled in the art that various changes and modifications can be made without departing from the spirit and scope of the invention. The present application is based on a Japanese Patent Application (Patent Application No. 2020-082731) filed on May 8, 2020, contents of which are incorporated herein by reference.

REFERENCE SIGNS LIST

10: Object to be coated
11: First coating film layer
12: Second coating film layer

**Claims**

1. A coating material comprising a resin component, a first oil component, and a second oil component, wherein

   the second oil component can exude out from a cured or dried coating film layer to which the coating material has been applied when a temperature drops to a predetermined value or less, and
   the first oil component satisfies at least one of the following (1) or (2):

   (1) kinematic viscosity at 25°C is 300 cSt or more, and
   (2) viscosity at 20°C is 0.1 Pa s or more.

2. The coating material according to claim 1, wherein
   a difference between a value of a solubility parameter of the resin component and a value of a solubility parameter of the first oil component is smaller than a difference between the value of the solubility parameter of the resin component and a value of a solubility parameter of the second oil component.

3. The coating material according to claim 1 or 2, wherein
   the viscosity of the first oil component at 20°C is 30 Pa·s or less.

4. A laminate comprising the coating film layer obtained by curing the coating material according to any one of claims 1 to 3 and a pressure-sensitive adhesive layer.

## FIG. 1

11

10

## FIG. 2

12

11

10

## INTERNATIONAL SEARCH REPORT

| | International application No. |
|---|---|
| | PCT/JP2021/017310 |

A. CLASSIFICATION OF SUBJECT MATTER
B32B 27/00(2006.01)i; C09D 5/00(2006.01)i; C09D 201/00(2006.01)i; C09K
3/18(2006.01)i; C09D7/65(2018.01)i; C09J7/38(2018.01)i
FI: C09D201/00; C09D7/65; C09J7/38; C09K3/18; B32B27/00 M; C09D5/00
According to International Patent Classification (IPC) or to both national classification and IPC

B. FIELDS SEARCHED

Minimum documentation searched (classification system followed by classification symbols)
B32B27/00; C09D5/00; C09D201/00; C09K3/18; C09D7/65; C09J7/38

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 62-252477 A (CHUGOKU MARINE PAINTS, LTD.) 04 November 1987 (1987-11-04) claims, examples | 1-4 |
| A | JP 2003-328308 A (MITSU-UMA CO., LTD.) 19 November 2003 (2003-11-19) claims, examples | 1-4 |
| A | WO 2018/223781 A1 (LUOYANG INSTITUTE OF CUTTING-EDGE TECHNOLOGY) 13 December 2018 (2018-12-13) claims, examples | 1-4 |
| A | WO 2018/182023 A1 (NITTO DENKO CORP.) 04 October 2018 (2018-10-04) claims, examples | 1-4 |
| A | JP 2016-108416 A (NITTO DENKO CORP.) 20 June 2016 (2016-06-20) claims, examples | 1-4 |
| P, A | WO 2020/096071 A1 (NITTO DENKO CORP.) 14 May 2020 (2020-05-14) claims, examples | 1-4 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 July 2021 (01.07.2021) | 13 July 2021 (13.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2021/017310 |

C (Continuation).   DOCUMENTS CONSIDERED TO BE RELEVANT

| Category* | Citation of document, with indication, where appropriate, of the relevant passages | Relevant to claim No. |
|---|---|---|
| P, A | WO 2020/096070 A1 (NITTO DENKO CORP.) 14 May 2020 (2020-05-14) claims, examples | 1-4 |

Form PCT/ISA/210 (continuation of second sheet) (January 2015)

**INTERNATIONAL SEARCH REPORT**
Information on patent family members

| International application no. |
| --- |
| PCT/JP2021/017310 |

| Patent Documents referred in the Report | Publication Date | Patent Family | Publication Date |
| --- | --- | --- | --- |
| JP 62-252477 A | 04 Nov. 1987 | (Family: none) | |
| JP 2003-328308 A | 19 Nov. 2003 | (Family: none) | |
| WO 2018/223781 A1 | 13 Dec. 2018 | CN 109233618 A claims, examples | |
| WO 2018/182023 A1 | 04 Oct. 2018 | (Family: none) | |
| JP 2016-108416 A | 20 Jun. 2016 | (Family: none) | |
| WO 2020/096071 A1 | 14 May 2020 | (Family: none) | |
| WO 2020/096070 A1 | 14 May 2020 | (Family: none) | |

Form PCT/ISA/210 (patent family annex) (January 2015)

**EP 4 147 870 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000026844 A
- JP 2020082731 A